(19) **Europäisches Patentamt European Patent Office Office européen des brevets**

(11) **EP 4 575 587 B1**

(12) **FASCICULE DE BREVET EUROPEEN**

(45) Date de publication et mention
de la délivrance du brevet:
**21.01.2026 Bulletin 2026/04**

(51) Classification Internationale des Brevets (IPC):
*G01V 1/01* *(2024.01)*

(21) Numéro de dépôt: **24220901.3**

(52) Classification Coopérative des Brevets (CPC):
**G01V 1/01**

(22) Date de dépôt: **18.12.2024**

(54) **MÉTHODE ET DISPOSITIF DE DÉTECTION DE SÉISMES**

VERFAHREN UND VORRICHTUNG ZUR ERKENNUNG VON ERDBEBEN

METHOD AND DEVICE FOR DETECTING EARTHQUAKES

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **21.12.2023 FR 2314781**

(43) Date de publication de la demande:
**25.06.2025 Bulletin 2025/26**

(73) Titulaire: **SAGEMCOM ENERGY & TELECOM SAS**
**92270 Bois-Colombes (FR)**

(72) Inventeurs:
• **BASTURK, Ahmet Samed**
**92270 BOIS-COLOMBES (FR)**
• **SABRAOUI, Abbas**
**92270 BOIS-COLOMBES (FR)**
• **ABID, Oussama**
**92270 BOIS-COLOMBES (FR)**

(74) Mandataire: **Novagraaf Technologies**
**Bâtiment O2**
**2, rue Sarah Bernhardt**
**CS90017**
**92665 Asnières-sur-Seine Cedex (FR)**

(56) Documents cités:
KR-A- 20220 067 588    US-A1- 2013 328 688
US-A1- 2021 124 070    US-A1- 2021 356 612
US-B1- 10 876 277

## EP 4 575 587 B1

## Description

### Domaine technique

Sont décrits une méthode et un dispositif de détection de séismes. La méthode et le dispositif peuvent notamment être utilisés pour déclencher des alertes er des actions de sécurisation, par exemple de sécurisation d'un système de distribution d'une ressource.

### Arrière-plan technique

Certains systèmes de détection de séisme mettent en oeuvre des capteurs de vibrations ou des capteurs de pression acoustique. De tels systèmes peuvent être coûteux et difficiles à installer. De tels systèmes peuvent aussi mettre en oeuvre des modèles prédictifs entraînés (apprentissage machine), mais nécessitent des ressources de calcul qui peuvent être importantes. De telles ressources ne sont pas disponibles dans certains contextes d'utilisation.

Il est par conséquent souhaitable de disposer d'une méthode pour détecter un séisme qui soit économique en termes de ressources de calcul. KR 2022 0067588 divulgue un procédé de détection en temps réel des mouvements sismiques. Les données d'accélération sont mesurées à l'aide d'enregistreurs sismiques comprenant un accéléromètre triaxial. Les données enregistrées sont soumises à un filtrage passe-haut ou passe-bas. Ensuite, les composantes X et Y des données d'accélération sont déterminées. Un séisme est détecté si les données d'accélération verticale de chaque capteur dépassent une première valeur de référence prédéterminée et les données d'accélération reçues de chaque enregistreur sismique sont corrélées, et si la valeur de corrélation dépasse une troisième valeur de référence prédéterminée.

### Résumé

Un ou plusieurs modes de réalisation concernent une méthode de détection d'un séisme mise en oeuvre par un dispositif comportant au moins un processeur et une mémoire comportant du code logiciel, l'au moins un processeur amenant le dispositif à mettre en oeuvre la méthode lorsqu'il exécute le code logiciel, la méthode comprenant :

- la réception d'un signal représentatif de mesures d'une accélération en trois dimensions du sol dispositif en fonction du temps, le signal étant reçu d'un capteur accéléromètre ;
- le filtrage fréquentiel du signal, le filtrage étant configuré avec une fréquence de coupure basse et une fréquence de coupure haute pour exclure au moins des fréquences ne correspondant pas à des fréquences d'ondes sismiques ;
- la détermination, à partir du signal filtré, de données représentatives de directions de l'accélération en fonction du temps ;
- un séisme étant détecté si

  a) la magnitude de l'accélération est supérieure à un premier seuil et les directions de l'accélération sont sensiblement colinéaires entre elles pendant un premier intervalle de temps; ou

  b) les directions de l'accélération sont sensiblement colinéaires entre elles pendant un second intervalle de temps et que les directions de l'accélération sont sensiblement colinéaires entre elles pendant un troisième intervalle de temps postérieur au second intervalle de temps, et que les directions de l'accélération du second intervalle et du troisième intervalle sont sensiblement orthogonales.

La méthode utilise des données issues d'un accéléromètre en trois dimensions. Un tel capteur peut être simplement intégré dans ou relié à un dispositif comportant des ressources en calcul relativement modestes pour traiter les données du capteur. Un tel dispositif peut par exemple être un dispositif compteur d'une ressource et qu'il peut être nécessaire de sécuriser.

L'invention permet donc de proposer un dispositif de détection locale d'un séisme pour un coût modique. La détection locale permet d'agir en conséquence pour déclencher des actions de sécurisation, même quand le dispositif n'est pas connecté à un réseau de communication, ou quand ce réseau de communication est défaillant.

Selon un ou plusieurs exemples de réalisation, les fréquences de coupure sont adaptées pour exclure des fréquences correspondant à du bruit en provenance de l'environnement du dispositif.

Selon un ou plusieurs exemples de réalisation, la détermination de données représentatives de directions de l'accélération en fonction du temps n'est effectuée que si une magnitude de l'accélération dépasse un second seuil avant le filtrage du signal et dépasse un troisième seuil après le filtrage du signal.

Selon un ou plusieurs exemples de réalisation, les second et troisième seuils sont adaptés pour être au-dessus de magnitudes d'accélérations correspondant à du bruit en provenance de l'environnement du dispositif.

2

Selon un ou plusieurs exemples de réalisation, la méthode comprend l'adaptation des fréquences de coupure, respectivement l'adaptation du second seuil et du troisième seuil, en fonction de données labellisées historiques de l'accélération dans un lieu de fonctionnement du dispositif.

La méthode comporte un calibrage de certains seuils pour prendre en compte le bruit ambiant et éviter ou du moins limiter ainsi les déclenchements intempestifs, tels que des faux positifs ou faux négatifs. Avantageusement, ce calibrage est réalisé à l'aide de données historiques labellisées.

Selon un ou plusieurs exemples de réalisation, une détermination de la colinéarité de directions de l'accélération est effectuée, comprenant :

- la détermination d'un hyperplan par rapport à N points de mesure consécutifs issus du signal et la détermination d'une direction normale à ce plan, avec N>1 ;
- l'itération de l'étape précédente sur M ensembles de N points d'un intervalle de temps considéré, avec M>1 ;
- la conclusion qu'il y a sensiblement colinéarité sur l'intervalle de temps considéré si les angles des N directions normales prises deux à deux sont dans deux fourchettes comprenant respectivement 0° et 180°.

Selon un ou plusieurs exemples de réalisation, une détermination de l'orthogonalité de directions de l'accélération est effectuée, comprenant :

- la détermination d'un hyperplan par rapport à N points de mesure consécutifs issus du signal et la détermination d'une direction normale à ce plan, avec N>1 ;
- l'itération de l'étape précédente sur deux ensembles de N points d'un intervalle de temps considéré;
- la conclusion qu'il y a sensiblement orthogonalité si l'angle entre les directions normales des deux hyperplans déterminés à l'étape précédente sont dans deux fourchettes comprenant respectivement 90° et 270°.

Selon un ou plusieurs exemples de réalisation, la méthode comprend, en réponse à la détection d'un séisme, la génération d'un signal de contrôle d'un équipement de sécurisation d'une ressource comptée par le dispositif.

Selon un ou plusieurs exemples de réalisation, la méthode comprend, en réponse à la détection d'un séisme, la génération d'un message d'alerte à destination d'un serveur. Selon un ou plusieurs exemples de réalisation, un séisme n'est détecté dans le cas b) que si la magnitude de l'accélération dépasse un quatrième seuil, inférieur au premier seuil.

Un ou plusieurs modes de réalisation concernent un dispositif de détection de séisme comprenant une mémoire comportant du code logiciel et le processeur, le processeur étant adapté, lorsqu'il exécute le code, à conduire le dispositif à mettre en œuvre l'une des méthodes ci-dessus.

Selon un ou plusieurs exemples de réalisation, le dispositif comprend un accéléromètre en trois dimensions.

Un ou plusieurs modes de réalisation concernent un produit programme d'ordinateur comportant des instructions qui lorsqu'elles sont exécutées par au moins un processeur causent l'exécution d'une des méthodes décrites par ledit au moins un processeur.

Un ou plusieurs modes de réalisation concernent un support de stockage non transitoire comportant des instructions qui lorsqu'elles sont exécutées par au moins un processeur causent l'exécution d'une des méthodes décrites par ledit au moins un processeur.

**Brève description des figures**

D'autres caractéristiques et avantages apparaîtront au cours de la lecture de la description détaillée qui va suivre pour la compréhension de laquelle on se reportera aux dessins annexés parmi lesquels :

- la figure 1 est un diagramme schématique d'un système comprenant un dispositif selon un ou plusieurs modes de réalisation ;
- la figure 2 est un diagramme schématique illustrant un repère XYZ d'un capteur d'accélération 200 et un repère QLT des ondes sismiques ;
- la figure 3 est un algorigramme d'une méthode selon un ou plusieurs exemples de réalisation ;
- la figure 4 est un graphe illustrant un exemple de filtre passe-bande selon un exemple de réalisation ;
- la figure 5 est un algorigramme d'un procédé de calibrage selon un exemple de réalisation ;
- la figure 6 est un algorigramme d'une méthode d'analyse 600 des composantes vectorielles selon un exemple de réalisation particulier ;
- la figure 7 est un exemple non limitatif de méthode de détermination de colinéarité et d'orthogonalité ;
- la figure 8 comporte deux graphes (a) et (b) représentant respectivement l'évolution d'un angle utilisé dans l'évaluation de la colinéarité ou de l'orthogonalité de déplacements dus à un séisme en fonction du temps et illustrant l'application de la méthode selon un ou plusieurs exemples de réalisation et la magnitude de l'accélération.

## Description détaillée

Dans la description qui va suivre, des éléments identiques, similaires ou analogues seront désignés par les mêmes chiffres de référence. Les diagrammes blocs, algorigrammes et diagrammes de séquence de messages dans les figures illustrent l'architecture, les fonctionnalités et le fonctionnement de systèmes, dispositifs, procédés et produits programmes d'ordinateur selon un ou plusieurs exemples de réalisation. Chaque bloc d'un diagramme bloc ou chaque phase d'un algorigramme peut représenter un module ou encore une portion de code logiciel comprenant des instructions pour l'implémentation d'une ou plusieurs fonctions. Selon certaines implémentations, l'ordre des blocs ou des phases peut être changé, ou encore les fonctions correspondantes peuvent être mises en œuvre en parallèle. Les blocs ou phases de procédé peuvent être implémentés à l'aide de circuits, de logiciels ou d'une combinaison de circuits et de logiciels, et ce de façon centralisée, ou de façon distribuée, pour tout ou partie des blocs ou phases. Les systèmes, dispositifs, procédés et méthodes décrits peuvent être modifiés, faire l'objet d'ajouts et/ou de suppressions tout en restant dans le cadre de la présente description. Par exemple, les composants d'un dispositif ou d'un système peuvent être intégrés ou séparés. Également, les fonctions décrites peuvent être mises en œuvre à l'aide de plus ou de moins de composants ou de phases, ou encore avec d'autres composants ou à travers d'autres phases. Tout système de traitement de données adapté peut être utilisé pour l'implémentation. Un système ou dispositif de traitement de données adapté comprend par exemple une combinaison de code logiciel et de circuits, tels un processeur, contrôleur ou autre circuit adapté pour exécuter le code logiciel. Lorsque le code logiciel est exécuté, le processeur ou contrôleur conduit le système ou dispositif à mettre en œuvre tout ou partie des fonctionnalités des blocs et/ou des phases des procédés ou méthodes selon les exemples de réalisation. Le code logiciel peut être stocké dans une mémoire non volatile ou sur un support de stockage non volatile (clé USB, carte mémoire ou autre support) lisible directement ou à travers une interface adaptée par le processeur ou contrôleur.

La présente description concerne un dispositif de détection de séisme. Le contexte des exemples de réalisation particuliers est un compteur de ressources, ainsi que la mise en place d'une sécurisation en cas détection de séisme. Ce contexte est donné à titre illustratif et ne doit pas être interprété pour limiter l'invention à ce seul contexte. Les ressources comptées comprenant par exemple des fluides (gaz, eau, carburant...) ou de l'énergie électrique. Une détection de séisme est de manière plus générale intéressante pour tout compteur dont la ressource peut être perdue ou qui peut provoquer des dégâts suite à un séisme.

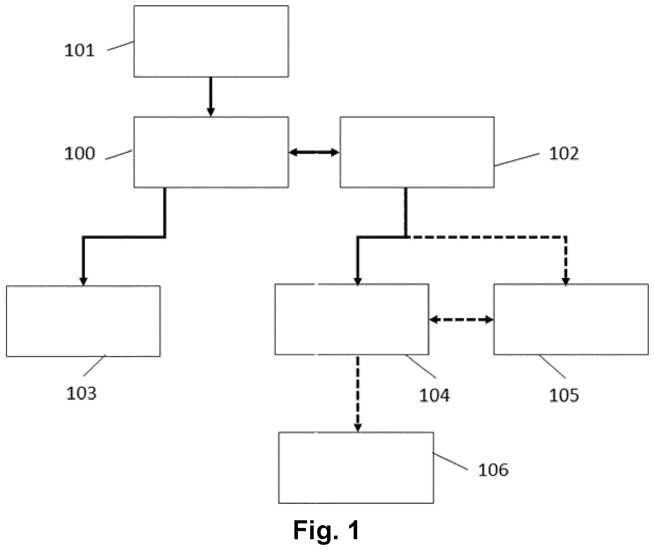

La figure 1 est un diagramme schématique d'un système comprenant un dispositif 100 selon un ou plusieurs modes de réalisation. Le dispositif 100 est par exemple un compteur d'une ressource. Le dispositif 100 reçoit des données d'un accéléromètre trois dimensions 101. Ce capteur peut également être partie intégrante du dispositif 100. Le dispositif 100 comporte également un processeur et de la mémoire non volatile comportant du code logiciel pour la mise en œuvre de la méthode de détection de séisme. Optionnellement, le compteur peut également posséder une interface de commande configurée pour déclencher une action de sécurisation, comme par exemple la fermeture d'une vanne 103.

Optionnellement, une interface de communication 102 connectée au dispositif 100 est configurée pour permettre la communication entre le dispositif 100 et un tiers, par exemple le serveur 104. L'interface de communication 102 peut être une interface sans fil, par exemple cellulaire, ou une interface vers un réseau filaire, par exemple un réseau téléphonique classique. Le dispositif 100 est adapté à informer le serveur 104 de la détection d'un séisme. Le serveur 104 peut alors déclencher une action, par exemple une information d'une autorité compétence 106, et/ou informer d'autres dispositifs 105, similaires au dispositif 100 pour que ces derniers enclenchent le cas échéant des actions de sécurisation à leur tour.

Optionnellement, le dispositif 100 est configuré pour transmettre une alerte de séisme directement à un ou plusieurs autres dispositifs 105 pour que ces derniers enclenchent le cas échéant des actions de sécurisation à leur tour. Selon une variante de réalisation, la transmission passe par le serveur 104, c'est-à-dire qu'une alerte est envoyée par le dispositif 100 au serveur 104, qui la transmet à un ou plusieurs dispositifs 105, comme par exemple les dispositifs 105 à proximité du dispositif 100 et par conséquent également exposés aux risques du séisme.

La transmission d'une alerte par le dispositif 100 à des dispositifs 105 et/ou le déclenchement d'une action par un dispositif 105 peuvent être soumises à un critère de proximité géographique entre le dispositif 100 et le ou les dispositifs 105. Optionnellement, le serveur 104 est en communication avec une pluralité de dispositifs 105 du type du dispositif 100 et peut recevoir des alertes de séisme de plusieurs dispositifs 100. Ceci permet d'adapter la stratégie de déclenchement d'une action - par exemple, il est possible de déclencher une action uniquement si plusieurs dispositifs 100 ont détecté un séisme.

Dans le contexte d'un dispositif 100 comportant une fonctionnalité de compteur, le dispositif 100 peut être amené à communiquer à intervalles réguliers ou sur demande des données de consommation de la ressource qu'il compte. Cette transmission est par exemple effectuée avec une périodicité d'une journée, et peut être déclenchée par une requête du serveur. Dans le cas d'une détection de séisme, le dispositif 100 est, selon un mode de réalisation particulier, configuré pour forcer la transmission d'un message, en s'affranchissant des contraintes liées à la transmission des données de comptage. Certains principes physiques liés à un séisme vont maintenant être décrits. Lors d'un séisme, différents types d'ondes sismiques sont présentes, définies par leur vitesse de propagation, leur amplitude et leur polarisation. Les principaux types d'onde sont comme suit :

- les ondes 'P' (pour 'Primaires') - ces ondes se propagent rapidement et sont ressenties en premier ;
- les ondes 'S' (pour 'Secondaires') - ces ondes arrivent généralement après les ondes P ;
- les ondes de cisaillement - ces ondes arrivent généralement après les deux ondes précédentes et sont les plus destructrices.

Le tableau 1 présente un récapitulatif des principaux types d'onde générées durant un séisme.

[Tableau 1]

| Ondes | P | S | Love | Rayleigh |
|---|---|---|---|---|
| Type d'onde | Compression | Cisaillement | Cisaillement | Cisaillement |
| Vitesse (km/s) | ~5,6 | ~3,2 | ~3 | ~3 |
| Dommages | Faibles | Moyens | Elevés | Elevés |
| Polarisation | Horizontale | Verticale | Horizontale | Rotationnelle |

Le tableau 1 montre que plus les ondes sont tardives, plus elles sont généralement destructrices. Les actions de sécurisation et/ou les alertes doivent donc être déclenchées dès que possible. Une détection précoce est donc préférable.

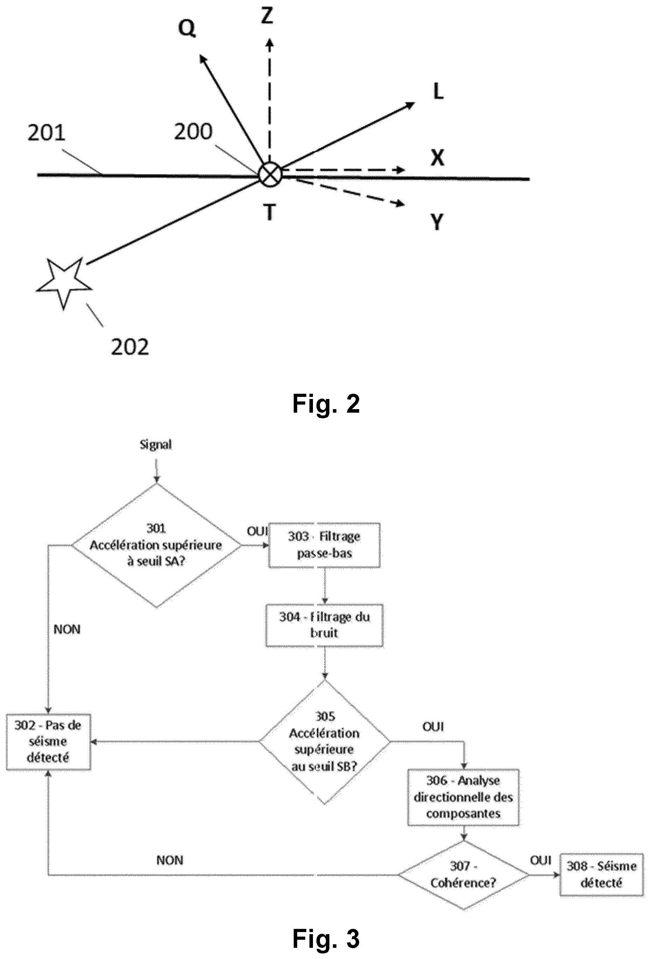

La figure 2 est un diagramme schématique illustrant un repère XYZ d'un capteur d'accélération 200 et un repère QLT des ondes sismiques. Un repère orthogonal lié au dispositif possède deux axes X et Y dans le plan de la surface 201 (supposée plane) et un axe Z à la verticale de cette surface. La direction de propagation des ondes sismiques de la source 202 vers le capteur 200 est indiquée par L et la direction orthogonale à la direction de propagation et dans le plan comprenant cette direction L, la source 202 et le capteur 200 par Q. Un axe T est perpendiculaire aux axes L et Q. Dans l'exemple illustré, les ondes P génèrent des accélérations suivant les axes X et Z, tandis que les ondes S génèrent des accélérations suivant les axes X et Y.

Le tableau 2 indique une échelle d'intensité de séisme, ainsi que pour chaque niveau de l'échelle : l'accélération, la vitesse, le tremblement ressenti, le dommages potentiels et l'effet sur certaines ressources. Le tableau montre (a) qu'un séisme peut être ressenti à partir d'une amplitude d'accélération d'environ 3 mg (2.97 mg dans le tableau) et (b) que les dommages apparaissent à partir d'une amplitude d'accélération d'environ 27 mg.

[Tableau 2]

| Intensité mesurée | Accélération (9) | Vitesse (cm/s) | Tremblement ressenti | Dommages potentiels | Ressources |
|---|---|---|---|---|---|
| I | <0.000464 | <0.0215 | Aucun ressenti | Aucun | |
| II-III | 0.000464 - 0.00297 | 0.135 - 1.41 | Faible | Aucun | |
| IV | 0.00297 - 0.00276 | 1.41 - 4.65 | Léger | Aucun | |
| V | 0.0276 - 0.115 | 4.65 - 9.64 | Modéré | Très léger | Déclenchement de valves automatiques pour gaz domestique. Interruption de certaines conduites d'eau. Coupures de courant. |
| VI | 0.115 - 0.215 | 9.64 - 20 | Fort | Léger | Conduites d'eau et de gaz endommagées. Interruption de la fourniture de gaz et d'eau dans certaines régions. |
| VII | 0.215 - 0.401 | 20 - 41.4 | Très fort | Modéré | Comme à la ligne précédente. |
| VIII | 0.401 - 0.747 | 41.4 - 85.8 | Sévère | Modéré à important | Conduites d'eau et de gaz endommagées. Interruption de la fourniture de gaz, |
| | | | | | d'eau et d'électricité. |

(suite)

| Intensité mesurée | Accélération (9) | Vitesse (cm/s) | Tremblement ressenti | Dommages potentiels | Ressources |
|---|---|---|---|---|---|
| IX | 0.747 - 1.39 | 85.8 - 178 | Violent | Important | |
| X | >1.39 | >178 | Extrême | Très important | |

Selon un ou plusieurs modes de réalisation, on cherche à détecter un séisme :

i. à un moment situé entre l'arrivée des ondes P et avant l'arrivée des ondes de surface (ondes Love et Rayleigh), et/ou
ii. au passage des ondes P aux ondes S.

Il est proposé de mettre en œuvre un accéléromètre en trois dimensions pour capter les ondes dues au séisme. Les signaux issus de l'accéléromètre sont alors utilisés pour la détection du séisme.

Concernant le premier point, i, ci-dessus, une vérification sur la magnitude de l'accélération est réalisée. Si la magnitude dépasse un seuil, alors un séisme est détecté. Concernant le second point, ii, ci-dessus, les ondes P et les ondes S étant orthogonales, le passage des ondes P aux ondes S peut être détecté en effectuant une analyse directionnelle et en testant l'orthogonalité des axes d'accélération dans le temps.

Il est à noter que les déplacements générés par les ondes P sont colinéaires entre eux, et que les déplacements générés par les ondes S sont colinéaires entre eux.

Il est à noter qu'un séisme peut être détecté selon le second cas sans qu'il ne soit forcément détecté d'abord selon le premier cas. Cela peut par exemple arriver lorsque les ondes P détectées ne répondent pas aux critères de détection du premier cas.

Par ailleurs, les ondes sismiques possèdent généralement une fréquence située entre 0 et 50Hz. La vitesse de propagation augmente généralement avec la fréquence. Selon certains modes de réalisation, un filtre fréquentiel passe-bas est appliqué pour limiter la bande passante aux composantes fréquentielles correspondant à des ondes sismiques.

Selon certains modes de réalisation, un filtre fréquentiel passe-bande est appliqué pour limiter la bande passante aux composantes utiles. Les fréquences de coupure basse et/ou haute de ce filtre sont ajustées lors d'une phase de calibration décrite plus loin pour réduire l'impact du bruit ambiant sur la détection de séisme.

Selon les modes de réalisation, les filtres passe-bas et passe-bande sont combinés en un seul filtre, à savoir que la fréquence haute de ce filtre combiné filtre sensiblement les fréquences au-dessus de 50 Hz, mais peut être ajusté pour une fréquence de coupure haute moins élevée que 50 Hz.

Selon un ou plusieurs exemples de réalisation, une calibration est effectuée sur le lieu d'installation, dans le but de distinguer le bruit ambiant des signaux dus à un séisme. Le bruit ambiant comprend par exemple le bruit généré par un ascenseur, par le trafic (routier, ferroviaire, aérien), par divers appareils et machines... La calibration est par exemple effectuée sur la base d'une semaine de mesures afin d'ajuster les paramètres mis en oeuvre dans la méthode, et notamment un ou plusieurs seuils. Le bruit ambiant sera ainsi filtré pour limiter tant les faux positifs que les faux négatifs. Selon certains modes de réalisation, les paramètres ajustables comprennent au moins l'un parmi : la fréquence de coupure basse du filtre passe-bande, la fréquence de coupure haute du filtre passe-bande, un seuil SA de magnitude de l'accélération de déclenchement initial de la détection de séisme sur base du signal de l'accéléromètre, et un seuil SB de magnitude de l'accélération appliqué après filtrage du signal de l'accéléromètre.

La figure 3 est un algorigramme d'une méthode de détection de séisme selon un ou plusieurs exemples de réalisation non limitatifs. Le signal de l'accéléromètre est reçu en entrée. Il est vérifié en 301 si la magnitude de l'accélération dépasse le seuil de déclenchement initial SA. Ce seuil de déclenchement est choisi pour éviter des calculs inutiles et/ou limiter les faux positifs. Si le seuil de déclenchement SA n'est pas dépassé, alors aucun autre traitement du signal n'est entrepris - ce qui économise des ressources de traitement de signal - et aucun séisme n'est détecté (302). Si le seuil de déclenchement initial SA est dépassé, alors le signal en provenance de l'accéléromètre est soumis au filtrage fréquentiel passe-bas 303 limitant la bande passante à celle d'ondes générées lors d'un séisme. La mise en œuvre du seuil SA est cependant optionnelle et il est tout à fait possible de passer directement au filtrage du signal. En 304, un filtrage supplémentaire est appliqué au signal, dans le but d'éliminer ou du moins de limiter l'influence du bruit ambiant. En 305, la magnitude de l'accélération, est comparée après filtrage à un seuil SB. Si le seuil SB n'est pas dépassé, alors aucun séisme n'est détecté (302). Si le seuil SB est dépassé, alors une analyse des composantes directionnelles de l'accélération est réalisée en 306. Selon les résultats de cette analyse vérifiés en 307, soit aucun séisme n'est détecté (302), soit un séisme est détecté (308).

Selon certains modes de réalisation, en cas de détection de séisme, des actions de sécurisation déclenchées par la détection peuvent notamment comporter l'actionnement d'un élément de coupure de la ressource associée au compteur (vanne, sectionneur...). Selon certains modes de réalisation, en cas de détection d'un séisme, une alerte est transmise à un distributeur ou fournisseur de la ressource et/ou à une autorité compétente.

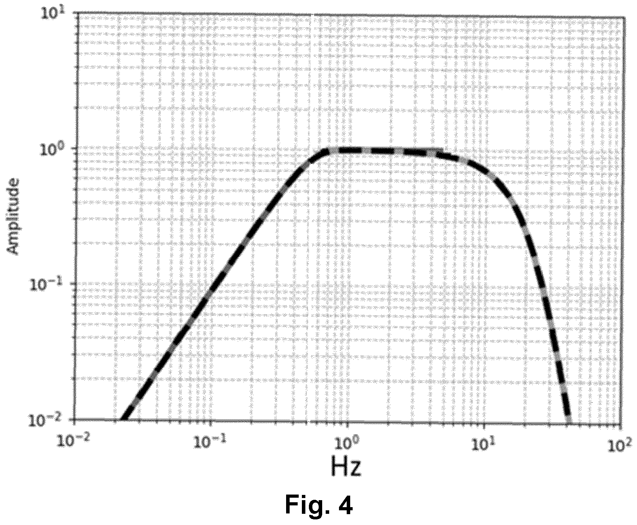

La figure 4 est un graphe illustrant un exemple de filtre passe-bande résultant de la combinaison d'un filtre passe-bas et d'un filtre passe-haut et réalisant le filtrage en 303 et 304. Les filtres passe-haut et passe-bas peuvent être réalisés numériquement sur la base respective des équations 1 et 2 :

[Math. 1]

$$\sqrt{1 - \left(e^{-3\frac{f}{f_0}}\right)}$$

[Math. 2]

$$\frac{1}{\sqrt{\sum_0^6 a_{2\times i} \times x^{2\times i}}}$$

f0 est la fréquence de coupure du filtre passe-haut, f1 est la fréquence de coupure du filtre passe-bas et f est la fréquence.

Le tableau 3 donne des exemples de valeurs des différents paramètres :

[Tableau 3]

| x | = f/f1 |
|---|---|
| f1 | = 10 |
| f0 | = 0.5 |
| a0 | = 1 |
| a2 | = 0.694 |
| a4 | = 0.241 |
| a6 | = 0.0557 |
| a8 | = 0.009664 |
| a10 | = 0.00134 |
| a12 | = 0.000155 |

Un calibrage d'un ou plusieurs paramètres est effectué dans le but de limiter l'impact de bruit ambiant sur la détection d'un séisme. Le bruit ambiant peut par exemple comprendre le bruit environnemental et/ou le bruit généré le cas échéant par la ressource elle-même (bruit généré par un liquide par exemple).

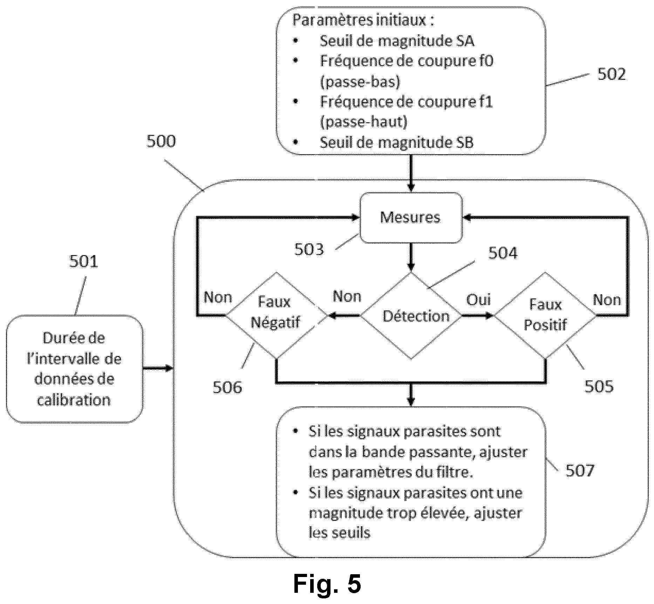

La figure 5 est un algorigramme d'un procédé de calibrage selon un exemple de réalisation. Cet algorigramme ajuste plusieurs paramètres. Il est à noter qu'il est tout à fait possible, selon l'implémentation, de n'ajuster qu'une partie de ces paramètres.

Le procédé de calibrage 500 illustré par la figure 5 reçoit en entrée une durée 501 de l'intervalle de données de calibrage. Cette durée peut être fixe ou ajustable. Elle est par exemple d'une semaine, pour couvrir une variété d'événements pendant les jours ouvrés et en fin de semaine. Le procédé reçoit également en entrée des valeurs initiales 502 des seuils SA et SB et des fréquences de coupure f0 (passe-bas) et f1 (passe-haut).

Des mesures 503 sont alors obtenues sur la durée spécifiée et une détection de séisme est alors réalisée en 504 sur base de ces mesures. Les faux positifs 505 et faux négatifs 506 sont alors manuellement libellés. Un ajustement des paramètres est réalisé sur cette base en 507. Si par exemple des bruits parasites tombent dans la bande de fréquence du filtre, alors les fréquences de coupure peuvent être ajustées pour exclure les fréquences de ces bruits. Si les bruits parasites ont une magnitude trop élevée par rapport aux seuils, ceux-ci sont relevés.

L'analyse des composantes vectorielles de l'accélération a pour but de caractériser la présence d'ondes P ou le passage des ondes P à des ondes S. Cette analyse est basée sur le fait que les déplacements générés par un type d'onde sont colinéaires entre eux et que les déplacements entre les ondes P et S sont orthogonales. La présence d'ondes sismiques peut donc être déterminée en estimant la colinéarité des mouvements représentés par des points de mesure successifs où un point est une mesure de l'accélération dans les trois dimensions. Si la colinéarité est avérée sur une certaine durée, alors cela peut signifier la présence d'une onde. De plus, l'orthogonalité des mouvements entre deux séries de points colinéaires peut indiquer le passage d'ondes P à des ondes S.

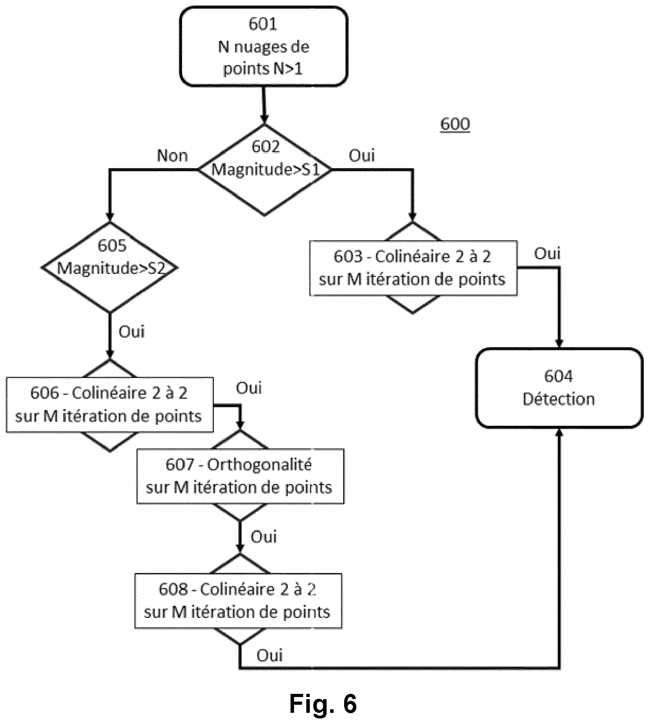

La figure 6 est un algorigramme d'une méthode d'analyse 600 des composantes vectorielles selon un exemple de réalisation particulier. La méthode de la figure 6 reçoit en entrée (en 601) une N nuages de points de mesure, avec N>1. Selon un mode de réalisation, N est paramétrable en fonction de la sensibilité désirée, des capacités de calcul et des performances de l'accéléromètre. Un nuage comporte une pluralité de points de mesure, dont le nombre peut être variable en fonction de la fréquence d'échantillonnage. Par exemple, on peut considérer une fréquence d'échantillonnage autour de 100Hz, entre 3 et 100 points par nuage, et jusqu'à 50 nuages. Ces valeurs sont données à titre illustratif et d'autres valeurs peuvent bien entendu être envisagées.

Dans un premier temps, en 602, une magnitude de l'accélération déterminée pour un nuage est comparée à un premier seuil S1. Cette magnitude correspond - par exemple - à la médiane des points du nuage, mais d'autres façons de calculer cette magnitude peuvent être envisagées. Le seuil S1 est - par exemple - situé entre 10mg et 100mg. Si le seuil S1 est atteint ou dépassé, alors une estimation de la colinéarité des mouvements correspondant à deux nuages successifs est effectuée sur M nuages, en 603. M est pris supérieur ou égal à 2. Si les mouvements sont colinéaires sur les M nuages, alors un séisme est détecté (604). Ceci correspond au cas 'i' évoqué plus haut - des ondes de type P, avec une magnitude de l'accélération relativement élevée dépassant un seuil S1.

Il se peut cependant que la magnitude détectée des ondes P soit en dessous du seuil S1. Dans ce cas, les ondes de type P passent inaperçues. Cependant, on teste alors en 605 si la magnitude est supérieure à un seuil S2, avec S2<S1. Si c'est le cas, alors on teste en 606 pour une colinéarité, la présence d'une orthogonalité en 607, suivi d'une colinéarité en 608. Chacun de ces trois tests peut être effectué sur M nuages successifs, mais le nombre de nuages peut être différent pour chacun des trois tests.

A titre purement illustratif, S1 et S2 ont par exemple les valeurs respectives de 20 mg et de 10 mg.

Selon un mode de réalisation, on considère des nuages de points successifs dans le temps. Un hyperplan est associé avec chaque nuage de points. Chaque plan est associé avec une direction de mouvement. Un critère de colinéarité et/ou d'orthogonalité est évalué pour les directions d'hyperplans successifs.

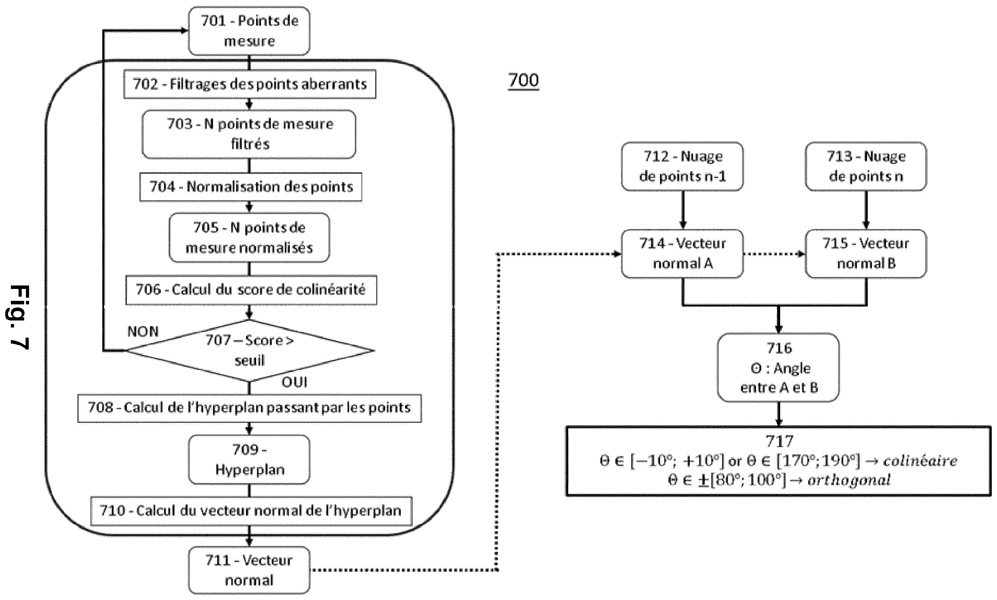

La figure 7 est un exemple non limitatif de méthode 700 de détermination de colinéarité et d'orthogonalité.

La méthode reçoit en entrée en 701 les points de mesure en trois dimensions d'un des nuages. Un filtrage des points aberrants peut alors être effectué selon une méthode connue en tant que telle pour limiter les mesures bruitées, en 702. Des points de mesure filtrés sont ainsi obtenus en 703. Les points sont alors normalisés en 704. Sur la base de ces points normalisés (705), un score de colinéarité est établi en 706. Ce score peut par exemple être basé sur un calcul de covariance. Si ce score est en dessous d'un seuil de colinéarité, alors il est jugé que les points du nuage ne sont pas colinéaires et l'on passe à un autre nuage de points. Ce test est effectué en 707. Si le score de colinéarité est supérieur ou égal au seuil, alors l'hyperplan relatif aux points du nuage est déterminé en 708, par exemple sur base d'une fonction polynomiale par laquelle on détermine un plan minimisant la distance entre les points du nuage et ce plan. L'hyperplan obtenu (709) est utilisé pour déterminer en 710 un vecteur normal à cet hyperplan.

Un vecteur normal est déterminé par nuage. Par exemple, pour deux nuages consécutifs n-1 et n (référencés 712 et 713 dans la figure 7), deux vecteurs normaux A et B (références 714 et 715) sont obtenus. Un angle $\Theta$ entre les deux vecteurs normaux est déterminé (716). Selon la valeur de $\Theta$, la colinéarité des deux vecteurs ou leur orthogonalité est déterminée. Les deux vecteurs peuvent également être ni colinéaires, ni orthogonaux. Selon le présent exemple de réalisation, les deux vecteurs sont considérés comme colinéaires si $\Theta$ est compris entre -10° et +10° ou entre 170° et 190, et comme orthogonaux si $\Theta$ est compris entre -80° et -100 ou entre +80° et +100°.

Ces seuils peuvent optionnellement être ajustables, par exemple pour tenir compte de la dispersion de l'accéléromètre.

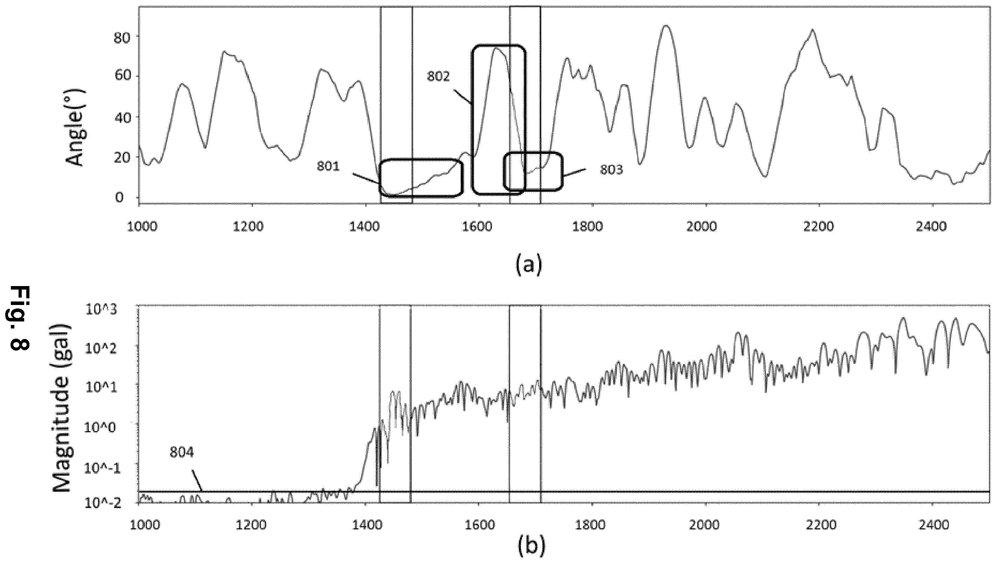

La figure 8 montre deux exemples de graphes illustrant l'application de la méthode selon un ou plusieurs exemples de réalisation. Le graphe supérieur (a) de la figure 8 représente l'angle $\Theta$ entre nuages de points successifs en degrés en fonction du temps, tandis que le graphe inférieur (b) représente la magnitude des accélérations en g représentée en échelle logarithmique en fonction du temps. L'unité de temps est le 10e de seconde. Le graphe (a) met en valeur une première partie 801 de la courbe, représentant une valeur d'angle de moins de 10 degrés sur un intervalle de temps relativement long. Cette partie correspond à une zone de colinéarité. Une seconde partie 802 de la courbe, suivant la première partie, montre une forte pointe de l'angle, correspondant à une orthogonalité, suivie d'une troisième partie 803, où l'angle revient vers une valeur autour de 10° pendant un certain intervalle de temps, correspondant à une seconde zone de colinéarité. Il est à noter que le graphe de la figure 8 est lissé et de ce fait la valeur seuil de 80° précédemment indiquée ne semble pas atteinte dans ce graphe. La première zone de colinéarité correspond à des ondes de type P, tandis que la seconde zone de colinéarité correspond à des ondes de type S, car précédée d'une zone indiquant une orthogonalité entre les mouvements entre respectivement les première et seconde zones de colinéarité. Le graphe (b) comporte une ligne horizontale 804 correspondant à une magnitude d'accélération de 20mg. On voit que la première zone de colinéarité, correspondant aux ondes de type P, coïncide avec une augmentation importante de la magnitude de l'accélération.

## Revendications

1. Méthode de détection d'un séisme mise en oeuvre par un dispositif (100) comportant au moins un processeur et une mémoire comportant du code logiciel, l'au moins un processeur amenant le dispositif à mettre en oeuvre la méthode lorsqu'il exécute le code logiciel, la méthode comprenant :

    - la réception d'un signal représentatif de mesures d'une accélération en trois dimensions du dispositif en fonction du temps, le signal étant reçu d'un capteur accéléromètre ;
    - le filtrage fréquentiel du signal (303, 304), le filtrage étant configuré avec une fréquence de coupure basse (f1) et une fréquence de coupure haute (f0) pour exclure au moins des fréquences ne correspondant pas à des fréquences d'ondes sismiques ;
    - la détermination (306, 600), à partir du signal filtré, de données représentatives de directions de l'accélération en fonction du temps ;
    - un séisme étant détecté (604) si

    a) la magnitude de l'accélération est supérieure (603) à un premier seuil (S1) et les directions de l'accélération sont sensiblement colinéaires entre elles pendant un premier intervalle de temps; ou
    b) les directions de l'accélération sont sensiblement colinéaires entre elles pendant un second intervalle de temps (606) et que les directions de l'accélération sont sensiblement colinéaires entre elles pendant un troisième intervalle de temps (608) postérieur au second intervalle de temps, et que les directions de l'accélération du second intervalle et du troisième intervalle sont sensiblement orthogonales (607).

2. Méthode selon la revendication 1, dans laquelle les fréquences de coupure sont adaptées (507) pour exclure des fréquences correspondant à du bruit en provenance de l'environnement du dispositif.

3. Méthode selon la revendication 1 ou 2, dans laquelle la détermination de données représentatives de directions de l'accélération en fonction du temps n'est effectuée que si une magnitude de l'accélération dépasse un second seuil (SA) avant le filtrage du signal (301) et dépasse un troisième seuil (SB) après le filtrage du signal (305).

4. Méthode selon la revendication 3, dans laquelle les second et troisième seuils sont adaptés (507) pour être au-dessus de magnitudes d'accélérations correspondant à du bruit en provenance de l'environnement du dispositif.

5. Méthode selon la revendication 3, respectivement la revendication 4, comprenant l'adaptation des fréquences de coupure, respectivement l'adaptation du second seuil et du troisième seuil, en fonction de données labellisées historiques de l'accélération dans un lieu de fonctionnement du dispositif.

6. Méthode selon l'une des revendications 1 à 5, dans laquelle une détermination de la colinéarité de directions de l'accélération est effectuée, comprenant :

    - la détermination d'un hyperplan (709) par rapport à N points de mesure consécutifs issus du signal et la détermination d'une direction normale à ce plan, avec N>1 ;
    - l'itération de l'étape précédente sur M ensembles de N points d'un intervalle de temps considéré, avec M>1 ;
    - la conclusion (717) qu'il y a sensiblement colinéarité sur l'intervalle de temps considéré si les angles des N directions normales prises deux à deux sont dans deux fourchettes comprenant respectivement 0° et 180°.

7. Méthode selon l'une des revendications 1 à 6, dans laquelle une détermination de l'orthogonalité de directions de l'accélération est effectuée, comprenant :

    - la détermination d'un hyperplan (709) par rapport à N points de mesure consécutifs issus du signal et la détermination d'une direction normale à ce plan, avec N>1 ;
    - l'itération de l'étape précédente sur deux ensembles de N points d'un intervalle de temps considéré;
    - la conclusion (717) qu'il y a sensiblement orthogonalité si l'angle entre les directions normales des deux hyperplans déterminés à l'étape précédente sont dans deux fourchettes comprenant respectivement 90° et 270°.

8. Méthode selon l'une des revendications 1 à 7, comprenant, en réponse à la détection d'un séisme, la génération d'un signal de contrôle d'un équipement de sécurisation d'une ressource comptée par le dispositif.

9.  Méthode selon l'une des revendications 1 à 8, comprenant, en réponse à la détection d'un séisme, la génération d'un message d'alerte à destination d'un serveur.

10. Méthode selon l'une des revendications 1 à 9, dans laquelle un séisme n'est détecté dans le cas b) que si la magnitude de l'accélération dépasse un quatrième seuil (S2), inférieur au premier seuil.

11. Dispositif (100) de détection de séisme comprenant une mémoire comportant du code logiciel et un processeur, le processeur étant adapté, lorsqu'il exécute le code,
à conduire le dispositif à mettre en œuvre la méthode selon l'une des revendications 1 à 9.

12. Dispositif selon la revendication 11, comprenant l'accéléromètre en trois dimensions (101).

13. Produit programme d'ordinateur comportant des instructions qui lorsqu'elles sont exécutées par au moins un processeur causent l'exécution de la méthode selon l'une des revendications 1 à 10 par ledit au moins un processeur.

14. Support de stockage non transitoire comportant des instructions qui lorsqu'elles sont exécutées par au moins un processeur causent l'exécution de la méthode selon l'une des revendications 1 à 10 par ledit au moins un processeur.


**Patentansprüche**

1.  Verfahren zum Erkennen eines Erdbebens, das von einer Vorrichtung (100) implementiert wird, die mindestens einen Prozessor und einen einen Softwarecode enthaltenden Speicher aufweist, wobei der mindestens eine Prozessor die Vorrichtung veranlasst, wenn sie den Softwarecode ausführt, das Verfahren zu implementieren, wobei das Verfahren umfasst:

    - Empfangen eines Signals, das Messungen einer Beschleunigung der Vorrichtung in drei Dimensionen in Abhängigkeit von der Zeit darstellt, wobei das Signal von einem Beschleunigungssensor empfangen wird;
    - Filtern der Frequenz des Signals (303, 304), wobei das Filtern mit einer niedrigen Grenzfrequenz (f1) und einer hohen Grenzfrequenz (f0) konfiguriert ist, um zumindest Frequenzen auszuschließen, die nicht den Frequenzen seismischer Wellen entsprechen;
    - Bestimmen (306, 600) von Daten aus dem gefilterten Signal, die die Beschleunigungsrichtungen in Abhängigkeit von der Zeit darstellen;
    - wobei ein Erdbeben erkannt wird (604), wenn

    a) die Größe der Beschleunigung größer ist (603) als ein erster Schwellenwert (S1) und die Beschleunigungsrichtungen während eines ersten Zeitintervalls im Wesentlichen kollinear zueinander sind; oder
    b) die Beschleunigungsrichtungen während eines zweiten Zeitintervalls (606) im Wesentlichen kollinear zueinander sind und die Beschleunigungsrichtungen während eines dritten Zeitintervalls (608), das auf das zweite Zeitintervall folgt, im Wesentlichen kollinear zueinander sind und die Beschleunigungsrichtungen des zweiten Intervalls und des dritten Intervalls im Wesentlichen orthogonal zueinander sind (607).

2.  Verfahren nach Anspruch 1, wobei die Grenzfrequenzen dazu ausgelegt sind (507), Frequenzen auszuschließen, die Rauschen aus der Umgebung der Vorrichtung entsprechen.

3.  Verfahren nach Anspruch 1 oder 2, wobei das Bestimmen von Daten, die Beschleunigungsrichtungen in Abhängigkeit von der Zeit repräsentieren, nur dann durchgeführt wird, wenn eine Größe der Beschleunigung vor dem Filtern des Signals (301) einen zweiten Schwellenwert (SA) überschreitet und nach dem Filtern des Signals (305) einen dritten Schwellenwert (SB) überschreitet.

4.  Verfahren nach Anspruch 3, wobei der zweite und der dritte Schwellenwert so ausgelegt sind (507), dass sie über den Größen der Beschleunigung liegen, die dem Rauschen aus der Umgebung der Vorrichtung entsprechen.

5.  Verfahren nach Anspruch 3 bzw. Anspruch 4, umfassend das Anpassen der Grenzfrequenzen bzw. das Anpassen des zweiten Schwellenwerts und des dritten Schwellenwerts in Abhängigkeit von gelabelten historischen Beschleunigungsdaten an einem Einsatzort der Vorrichtung.

6. Verfahren nach einem der Ansprüche 1 bis 5, bei dem ein Bestimmen der Kollinearität von Beschleunigungsrichtungen durchgeführt wird, umfassend:

- Bestimmen einer Hyperebene (709) bezüglich N aufeinanderfolgender Messpunkte aus dem Signal und das Bestimmen einer Richtung senkrecht zu dieser Ebene, wobei N>1 ist;
- Iterieren des vorherigen Schritts mit M Mengen aus N Punkten eines betrachteten Zeitintervalls, wobei M>1;
- das Schließen (717) darauf, dass im betrachteten Zeitintervall im Wesentlichen Kollinearität vorliegt, wenn die Winkel der N Normalenrichtungen, jeweils paarweise betrachtet, in zwei Bereichen liegen, die 0° bzw. 180° umfassen.

7. Verfahren nach einem der Ansprüche 1 bis 6, bei dem ein Bestimmen der Orthogonalität von Beschleunigungsrichtungen durchgeführt wird, umfassend:

- Bestimmen einer Hyperebene (709) bezüglich N aufeinanderfolgender Messpunkte aus dem Signal und das Bestimmen einer Richtung senkrecht zu dieser Ebene, wobei N>1 ist;
- Iterieren des vorherigen Schritts mit zwei Mengen aus N Punkten eines betrachteten Zeitintervalls;
- Schließen (717) darauf, dass im Wesentlichen Orthogonalität vorliegt, wenn die Winkel zwischen den Normalenrichtungen der beiden im vorherigen Schritt bestimmten Hyperebenen in zwei Bereichen liegen, die jeweils 90° und 270° umfassen.

8. Verfahren nach einem der Ansprüche 1 bis 7, umfassend als Reaktion auf das Erkennen eines Erdbebens das Erzeugen eines Steuersignals für eine Einrichtung zur Sicherung einer von der Einrichtung gezählten Ressource.

9. Verfahren nach einem der Ansprüche 1 bis 8, umfassend das Generieren einer Warnmeldung an einen Server als Reaktion auf das Erkennen eines Erdbebens.

10. Verfahren nach einem der Ansprüche 1 bis 9, wobei im Fall b) ein Erdbeben nur dann erkannt wird, wenn die Größe der Beschleunigung einen vierten Schwellenwert (S2) überschreitet, der niedriger als der erste Schwellenwert ist.

11. Vorrichtung zum Erkennen eines Erdbebens (100), umfassend einen Softwarecode enthaltenden Speicher und einen Prozessor, wobei der Prozessor dazu ausgelegt ist, wenn er den Code ausführt, die Vorrichtung zur Implementierung des Verfahrens nach einem der Ansprüche 1 bis 9 zu veranlassen.

12. Vorrichtung nach Anspruch 11, umfassend Messinstrumente (101) zum Beschleunigung in drei Dimensionen.

13. Computerprogrammprodukt, umfassend Anweisungen, die bei ihrer Ausführung durch mindestens einen Prozessor die Ausführung des Verfahrens nach einem der Ansprüche 1 bis 10 durch den mindestens einen Prozessor veranlassen.

14. Nichttransitorisches Speichermedium, umfassend Anweisungen, die bei ihrer Ausführung durch mindestens einen Prozessor die Ausführung des Verfahrens nach einem der Ansprüche 1 bis 10 durch den mindestens einen Prozessor veranlassen.

**Claims**

1. Method for detecting an earthquake implemented by a device (100) comprising at least one processor and a memory including software code, the at least one processor causing the device to implement the method when it executes the software code, the method comprising:

- receiving a signal representative of measurements of a three-dimensional acceleration of the device over time, the signal being received from an accelerometer sensor;
- frequency filtering of the signal (303, 304), the filtering being configured with a low cut-off frequency (f1) and a high cut-off frequency (f0) to exclude at least frequencies not corresponding to seismic wave frequencies;
- determining (306, 600), from the filtered signal, data representative of directions of the acceleration over time;
- an earthquake being detected (604) if

a) the magnitude of the acceleration is greater (603) than a first threshold (S1) and the directions of the acceleration are substantially collinear with one another during a first time interval; or

b) the directions of the acceleration are substantially collinear with one another during a second time interval (606) and the directions of the acceleration are substantially collinear with one another during a third time interval (608) subsequent to the second time interval, and the directions of the acceleration of the second interval and the third interval are substantially orthogonal (607).

2. Method according to claim 1, wherein the cut-off frequencies are adapted (507) to exclude frequencies corresponding to noise from the device environment.

3. Method according to either claim 1 or claim 2, wherein determining data representative of directions of the acceleration over time is performed only if a magnitude of the acceleration exceeds a second threshold (SA) before filtering the signal (301) and exceeds a third threshold (SB) after filtering the signal (305).

4. Method according to claim 3, wherein the second and third thresholds are adapted (507) to be above acceleration magnitudes corresponding to noise from the device environment.

5. Method according to claim 3 or claim 4, respectively, comprising adapting the cut-off frequencies, respectively adapting the second threshold and the third threshold, on the basis of historical labeled data of the acceleration at a device operating location.

6. Method according to any of claims 1 to 5, wherein a determination of the collinearity of directions of the acceleration is carried out, comprising:

- determining a hyperplane (709) with respect to N consecutive measurement points from the signal and determining a direction normal to this plane, where N>1;
- iterating the previous step on M sets of N points of a given time interval, where M>1;
- concluding (717) that there is substantial collinearity over the given time interval if the angles of the N normal directions taken in pairs are within two ranges comprising 0° and 180°, respectively.

7. Method according to any of claims 1 to 6, wherein a determination of the orthogonality of directions of the acceleration is carried out, comprising:

- determining a hyperplane (709) with respect to N consecutive measurement points from the signal and determining a direction normal to this plane, where N>1;
- iterating the previous step on two sets of N points of a given time interval;
- concluding (717) that there is substantial orthogonality if the angle between the normal directions of the two hyperplanes determined in the previous step are within two ranges comprising 90° and 270°, respectively.

8. Method according to any of claims 1 to 7, comprising, in response to the detection of an earthquake, generating a control signal for equipment securing a resource metered by the device.

9. Method according to any of claims 1 to 8, comprising, in response to the detection of an earthquake, generating an alert message to a server.

10. Method according to any of claims 1 to 9, wherein an earthquake is detected in case b) only if the magnitude of the acceleration exceeds a fourth threshold (S2), lower than the first threshold.

11. Earthquake detection device (100) comprising a memory including software code and a processor, the processor being adapted, when it executes the code, to cause the device to implement the method according to any of claims 1 to 9.

12. Device according to claim 11, comprising the three-dimensional accelerometer (101).

13. Computer program product comprising instructions which, when executed by at least one processor, cause the method according to any of claims 1 to 10 to be executed by said at least one processor.

14. Non-transitory storage medium comprising instructions which, when executed by the at least one processor, cause the method according to any of claims 1 to 10 to be executed by said at least one processor.

**Fig. 1**

**Fig. 2**

**Fig. 3**

Fig. 4

Paramètres initiaux :
- Seuil de magnitude SA
- Fréquence de coupure f0 (passe-bas)
- Fréquence de coupure f1 (passe-haut)
- Seuil de magnitude SB

502

500

501

Durée de l'intervalle de données de calibration

Mesures

503          504

Non    Faux    Non              Oui    Faux    Non
       Négatif         Détection        Positif

506                                            505

- Si les signaux parasites sont dans la bande passante, ajuster les paramètres du filtre.
- Si les signaux parasites ont une magnitude trop élevée, ajuster les seuils

507

**Fig. 5**

601
N nuages de
points N>1

600

Non

602
Magnitude>S1

Oui

605
Magnitude>S2

603 - Colinéaire 2 à 2
sur M itération de points

Oui

Oui

606 - Colinéaire 2 à 2
sur M itération de points

Oui

604
Détection

607 - Orthogonalité
sur M itération de points

Oui

608 - Colinéaire 2 à 2
sur M itération de points

Oui

# Fig. 6

Fig. 7

Fig. 8

# EP 4 575 587 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- KR 20220067588